Europäisches Patentamt

European Patent Office

Office européen des brevets

(11) Publication number: **0 157 493**
**B1**

## EUROPEAN PATENT SPECIFICATION

(45) Date of publication of patent specification: **22.08.90**

(21) Application number: **85301309.2**

(22) Date of filing: **27.02.85**

(51) Int. Cl.⁵: **F 16 L 13/11**

(54) Pipe coupling.

(30) Priority: **06.04.84 GB 8409028**

(43) Date of publication of application:
**09.10.85 Bulletin 85/41**

(45) Publication of the grant of the patent:
**22.08.90 Bulletin 90/34**

(84) Designated Contracting States:
**BE DE FR GB IT NL**

(56) References cited:
**BE-A- 765 459**
**DE-A-1 908 888**
**DE-A-2 621 192**
**DE-B-2 551 066**
**DE-C- 802 680**
**FR-A- 805 255**
**US-A-1 877 433**
**US-A-3 198 556**
**US-A-3 909 045**

(73) Proprietor: **Lancashire Fittings Limited**
**County Works Claro Road**
**Harrogate North Yorkshire HG1 4AF (GB)**

(72) Inventor: **Hadley, Herbert Roy**
**Collar Stoop Farm Fellbeck Pateley Bridge**
**Harrogate, HG3 5EX North Yorkshire (GB)**

(74) Representative: **Orr, William McLean et al**
**Haseltine Lake & Co Hazlitt House 28**
**Southampton Buildings Chancery Lane**
**London WC2A 1AT (GB)**

Courier Press, Leamington Spa, England.

# Description

This invention relates to a pipe coupling comprising a pipe socket and a pipe coupled therewith by jointing material, and to a method of assembling the pipe coupling.

It is well known to form pipe couplings by providing a pipe socket having a mouth which is oversized relative to the end of pipe to be received thereby, and joining together the socket and pipe end by the use of jointing material such as solder.

The pipe socket can take many different forms, for example as an enlarged end of a pipe length. Alternatively, a pipe socket may comprise a machined fitting having a socket at one end to receive a pipe end, and an internal or external thread at the opposite end to permit the fitting to be screwed to a complementary fitment. A pipe socket may also be formed by machining into a piece of equipment.

The present invention has been developed primarily, though not exclusively, in relation to solving problems connected with jointing pipe couplings of stainless steel. Stainless steel is an excellent material for use in pipes, pipe couplings and related fittings, because of its great resistance to corrosive attack and also its mechanical strength. Furthermore, the price of stainless steel is currently at such a relatively stable level, in relation to the somewhat fluctuating raw material price for copper, that it is now becoming appreciated that stainless steel is an acceptable alternative to copper for conveyance of hot and cold water in view of the superior properties of stainless steel which can outweigh any small price disadvantage.

There are two generally accepted modes of jointing stainless steel pipe couplings. It should be borne in mind that the soldering of stainless steel pipes is not nearly as straightforward as the soldering of copper pipes, and especial care has to be taken if a satisfactory joint is to be obtained. Some of the problems of soldering stainless steel couplings are disclosed in more detail in GB Patent Specification No. 1,481,965. Thus, solder is introduced into the pipe coupling so as to form a liquid-tight joint between the inner surface of the socket and the outer surface of the pipe end, and this may be achieved by first forming an initial coating on the pipe end from paste solder and flux, inserting the coated pipe end into the socket, heating the assembled pipe end and socket, and then introducing additional soft solder into the annular space defined between the pipe end and the socket after the initial coating has been rendered molten by the heating action. Upon cooling, a rigid and liquid-tight pipe coupling is formed, in which the solder jointing material is substantially void free.

Alternatively, another two part soldering operation which may be carried out involves formation of an initial joint between the assembled socket and pipe end using a phosphoric type flux to which is end fed a standard 60 Sn 40Pb solder wire. Thereafter, solder paste (incorporating solder powder in a liquid flux) is introduced so as to partly fill the annular space. Finally, the annular space is completely filled by the addition of end fed solder wire.

It is a matter of some debate as to the optimum range of radial clearance (when solder jointing material is used) between the outer surface of a pipe end and the inner surface of a socket in which the pipe end is received. Thus, a radial clearance which is too small will result in a solder layer which is insufficiently thick, and possibly not completely void free, to provide satisfactory sealing performance in service. However, while it is believed to be the case that the strength of a solder joint increases with solder layer thickness, over a certain range, there is an upper thickness beyond which, at the least, there is no commensurate increase in strength with increase in layer thickness. Indeed, it may even be the case that the operating performance i.e. the failure limit of a coupling may decrease when the solder layer thickness becomes greater than an upper critical value.

Generally speaking, however, it is the case that stainless steel couplings are jointed with solder with layer thicknesses (radial clearance) in the range 0.012 - 0.020 inches (0.305mm - 0.51mm).

The other mode of jointing stainless steel pipe couplings involves the use of anaerobic adhesives, such as Loctite 638 (trade mark), which are introduced into the annular space in order to form a metal-to-metal joint. These adhesives are suitable for operation in conditions in which the medium to be conveyed through the coupling will not exceed about 60°C in temperature. Also, joints made with anaerobic adhesives usually have a much smaller thickness (radial clearance) than solder joints, typically up to 0.004 inches with a maximum of 0.010 inches (0.1mm to 0.25mm).

In view of the differing requirements for radial clearance in stainless steel pipe couplings, depending upon whether solder or anaerobic adhesive is to be used, to date this can only be met by providing dual supplies of pipe socket for each pipe diameter. Evidently, this leads to a multiplicity of sizes, and also problems in both stocking and identification.

The present invention has been developed primarily with a view to avoid the necessity for dual stocking, and to provide a common design of pipe coupling (especially, though not exclusively a stainless steel pipe coupling) which can be jointed satisfactorily by solder or anaerobic adhesive as the customer requires.

According to the invention there is provided a pipe coupling comprising a socket, a pipe having one end received by the socket with a varying radial clearance so as to define an annular space of varying cross-section between the outer surface of the pipe end and the inner surface of the socket, and jointing material filling the annular space, the annular space including a part of smaller constant clearance, at or near to that edge of the pipe which is innermost with respect to the socket, and a part of greater constant clearance at a location spaced outwardly from the innermost edge, characterised in that the two parts are in communication with each other and the clearance of the annular space does not decrease outwardly of the part of greater constant clearance, the smaller radial clearance being not less than 0.05mm and the greater radial clearance being not more than 0.5mm, whereby the jointing material can be solder or adhesive as required.

Pipe couplings having varying clearance are known — see for example DE-B1-2 551 066 and US-A-3 909 045. However, these couplings have a fairly complex overall shape and are intended exclusively for adhesive joints, not disclosing the use of dimensions suitable for solder.

The radial clearance may vary abruptly or smoothly between the two portions. Conveniently, the required variation in radial clearance is obtained by providing a stepped configuration for the socket, in which case the pipe end may be of substantially uniform cross section.

It is preferred that the jointing material comprises solder filling or an anaerobic adhesive material, according to the wishes of the user. Thus, a common design of pipe coupling may be provided, with which either of the two jointing materials may be used while still providing a satisfactory joint in the pipe coupling.

When solder filling material is used, it will fill completely (in substantially void free manner) the part of the annular space having a greater clearance, and will at least partly penetrate the remainder of the annular space.

When anaerobic adhesive is used, it can readily penetrate, or occupy (if the socket is pre-filled prior to entry of the pipe end) the part of the annular space with the smaller predetermined clearance value, and will of course also readily provide void free occupation of the remainder (larger radial clearance) of the annular space.

The socket may be provided in any convenient way e.g. on one end (usually enlarged) of a pipe, as part of a flanged fitting, or as a machined socket in a machine part through which a fluid medium is to be conveyed.

If desired, a pre-filled solder ring, known per se in copper pipe fittings, may be provided in the wall of the socket. Also, a centre fit arrangement may be provided for the pipe coupling, preferably as disclosed in our GB Patent Specification No. 1,512,961.

The invention is particularly, though not exclusively, applicable to pipe couplings of stainless steel, though it should be understood that the principles of the invention disclosed herein may also be applicable to pipe couplings made of material other than stainless steel, e.g. copper.

Embodiments of the invention will now be described in detail, by way of example only, with reference to the accompanying drawing in which:

Figure 1 is a longitudinal sectional view of a first embodiment of pipe coupling according to the invention;

Figure 2 is a view, similar to Figure 1, of a second embodiment;

Figure 3 is a view, similar to Figures 1 and 2, of a third embodiment; and

Figure 4 is a view of a modification of the embodiment shown in Figure 1.

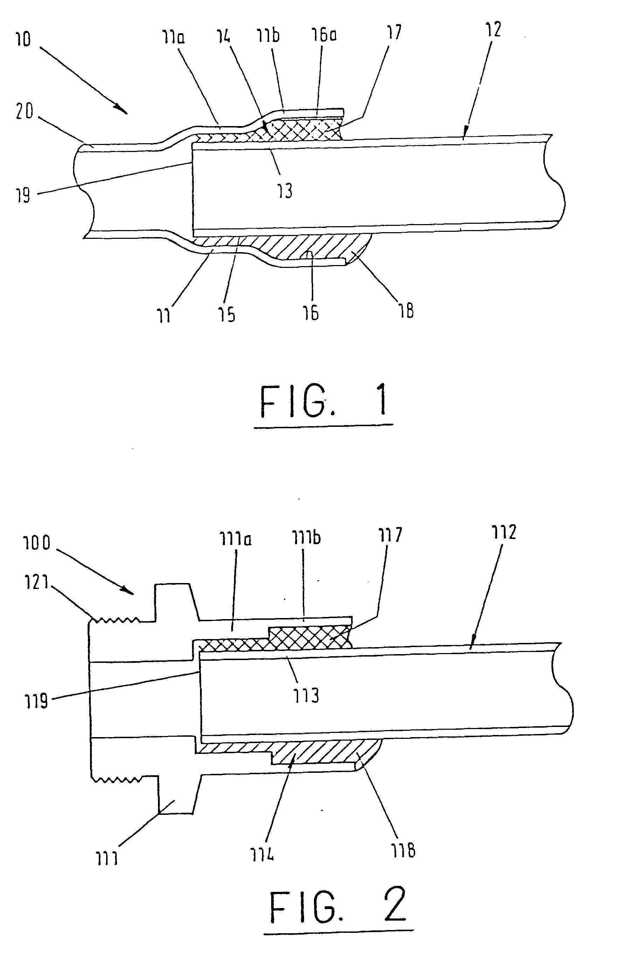

Referring now to Figure 1 of the drawing, there is shown a stainless steel pipe coupling 10 which comprises a socket 11 and a pipe 12 having one end 13 received by the socket 11 with radial clearance so as to define an annular space 14 between the outer surface 15 of the pipe end 13 and the inner surface 16 of the socket 11. Jointing material fills the annular space 14 so as to form a liquid-tight and substantially void-free joint between the socket 11 and pipe 12.

The pipe coupling 10 shown in Figure 1 has been especially designed so as to be able to use at least two different types of jointing material satisfactorily. In the upper part of Figure 1, the annular space 14 is shown filled with an adhesive filling 17 which comprises anaerobic adhesive, such as Loctite 638. The lower part of Figure 1 shows the annular space 14 filled by a solder filling 18. The solder filling, and the method of introducing the solder filling, are in accordance with procedures for "capillary joints" with stainless steel pipe couplings. Thus, the soldering technique may use a phosphoric based flux with a standard 60Sn 40Pb solder wire (grade K of BS 441), or a solder paste based on similar materials and as disclosed in more detail in GB Patent Specification 2,019,443. Alternatively, and as is preferred, the solder joints will be made using a newly developed solder paste comprising 60Sn 40Pb solder powder in a fluxing medium which has much improved wetting characteristics. In the soldering technique, the joint surfaces must first be cleaned by abrading with emery cloth, pre-coated with solder paste, assembled and heated until the paste forms a liquid solder, and then end fed with solder wire of similar composition.

In a soldered joint of a stainless steel pipe coupling, it is important that the annular space 14 should have sufficient radial clearance, at least over part of the end portion of the pipe 12 received by the socket 11, to enable a satisfactory thickness of solder layer to be formed. The layer thickness should be greater than a predetermined minimum value, to provide a joint which is sufficiently liquid-tight and substantially void-free. On the other hand, a stainless steel joint completed with the use of an anaerobic adhesive does not require to have as great a radial clearance as is necessary for a satisfactory soldered joint. As will now be described in more detail below, the shape of the annular space 14 in the pipe coupling 10 is such as to enable a satisfactory joint to be obtained in a stainless steel pipe coupling, regardless of whether an anaerobic adhesive or solder is used to complete the joint.

Thus, the radial clearance between the outer surface 15 of the pipe end 13 and the inner surface 16 of the socket 11 varies between a minimum at or near to the innermost edge 19 (with respect to the socket 11) of the pipe 12, and a maximum at a location spaced outwardly from the innermost edge 19. Furthermore, the minimum radial clearance is not less than 0.002 inches and the maximum radial clearance is not more than 0.020 inches (0.05mm to 0.5mm).

In the embodiment illustrated in Figure 1, the radial clearance of the annular space 14 varies stepwise in two portions, one of the portions extending outwardly from the innermost edge 19 and providing the minimum radial clearance throughout the length of this portion. The other of the portions provides the maximum radial clearance throughout its length. In Figure 1, the pipe end 13 is of substantially uniform cross section with at least the adjoining portions of the pipe, and the required variation in the radial clearance of the annular space 14 is obtained by providing a stepped configuration for the socket 11. Thus, the socket 11 has a first step 11a which is adjacent to the innermost edge 19 of pipe 12 and extends axially outwardly away from this edge with a substantially uniform cross section having the predetermined minimum radial clearance. The second step 11b of the socket 11 has a larger diameter than first step 11a into which it smoothly merges, and extends axially away from the first step 11a with a substantially uniform cross section having the predetermined maximum radial clearance.

It should be understood that the embodiment illustrated in Figure 1 is merely one example of means by which there may be provided an annular space between the pipe end 13 and the socket 11 which has a smaller constant-radial-clearance part at or near to the innermost edge of the pipe and a greater constant-clearance part outwardly from this.

As indicated above, the smaller radial clearance is not less than 0.002 inches (0.05mm) and the greater radial clearance is not more than 0.020 inches (0.5mm). It is preferred that the smaller radial clearance should lie in the range 0.002 to 0.008 inches, and the larger radial clearance should lie in the range 0.012 to 0,020 inches (0.3mm to 0.5mm). The axial length of the socket 11 should ideally be proportioned to reflect the allowable shear stresses in solder and in the adhesive. However, in practice the two socket lengths (11a, 11b), are similar, with some addition for the transition from the one diameter to the other, and hence the overall length of the socket 11 may be some 20% greater than existing designs of single diameter sockets. Nevertheless, it may be possible to reduce this overall length.

The ranges of radial clearance and other dimensions referred to above apply particularly to tubing from 6 mm outside diameter up to 42mm outside diameter in accordance with BS 4127. However, the same criteria can be extended to 54mm, 2 inch (51mm) and 3 inch (76mm) o.d. tubing.

When the user decides to employ anaerobic adhesive 17, this completely fills the annular space 14, though the more effective part of the joint is achieved within the smaller clearance part of the joint i.e. within the confines of the step 11a. Nevertheless, the adhesive present in the larger clearance part of the joint still contributes to the overall strength of the joint. Conversely, when the user employs solder 18, the more effective part of the joint is the larger clearance part, within the confines of step 11b, though hereagain the solder which occupies the smaller clearance part within the confines of step 11a will also contribute to the overall properties of the joint.

The embodiment shown in Figure 1 provides a socket 11 as an enlarged end of a pipe length 20. It should be clearly understood that this is merely by way of example only, and socket 11 may be provided in many other ways e.g. as a socket alone, or joined in other ways to existing lengths of pipe.

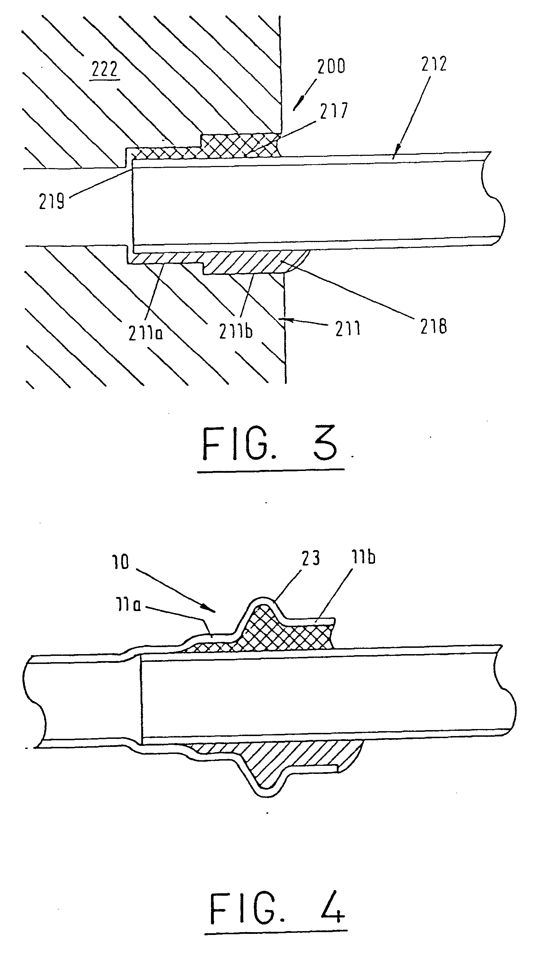

Figure 1 shows a pipe socket 11 provided on one end of a length of pipe 20. However, the invention is applicable to other forms of pipe coupling, as shown, by way of example only, in Figures 2 and 3. In Figure 2, the parts corresponding with the embodiment of Figure 1 are designated by similar reference numerals, with the addition of 100. The pipe coupling 100 shown in Figure 2 comprises a socket 111 which is a machined fitting having an external thread 121 by which the fitting can be attached to other pipe work and fittings.

In Figure 3, there is shown a third embodiment, having parts corresponding with those described in more detail in Figure 1 designated in similar reference numerals, but with the addition of 200. In Figure 3, the pipe coupling 200 has a pipe socket 211 which is formed as a machined socket in a machine part through which fluid medium is to be conveyed e.g. a manifold block 222.

Referring now to Figure 4, there is shown a modification to the pipe coupling 10 shown in Figure 10. At the transition between step 11a and 11b of the socket 11, there is formed a radially protruding annulus 23 which will be pre-filled with a solder ring, in a manner known per se in copper pipe fittings. The solderring is able to function as a reservoir of solder, which can be distributed into the joint by capillary action. The pipe coupling 10 may also be provided with a "center fit" facility, in the end of the smaller diameter portion 11a of the socket, in the manner described in more detail in our GB Patent Specification No. 1,512,961.

Evidently, the pipe couplings which are disclosed herein may form part of "in-line" pipe connections, or in angled connections e.g. 90° angle or Tee couplings.

As a modification to the described embodiments of the invention, it is preferred to pre-tin the inner surface of the larger diameter portion of the socket with a suitable solder. This is shown in the upper part of Figure 1, for illustrative purposes only, in the form of pre-tinned layer 16a. It has been found that the presence of this layer 16a generally eases the assembly when joining tubes and sockets by soldering, and also assists the joint strength when using anaerobic adhesive as it will to some extent reduce the diameter of the larger socket portion.

It is preferable to use a lead-free solder for the pre-tinning process which will be compatible with subsequently used lead/tin or lead free solder as jointing material.

## Claims

1. A pipe coupling (10) comprising a socket (11), a pipe (12) having one end (13) received by the socket with a varying radial clearance so as to define an annular space (14) of varying cross-section between the outer surface (15) of the pipe end (13) and the inner surface (16) of the socket (11), and jointing material (17, 18) filling the annular space (14), the annular space including a part (11a, 111a, 211a; 11b, 111b, 211b) of smaller constant clearance, at or near to that edge (19) of the pipe which is innermost with respect to the socket, and a part of greater constant clearance at a location spaced outwardly from the innermost edge (19), characterised in that the two parts are in communication with each other and the clearance of the annular space does not decrease outwardly of the part of greater constant clearance, the smaller radial clearance being not less than 0.05mm and the greater radial clearance being not more than 0.5mm, whereby the jointing material can be solder or adhesive as required.

2. A pipe coupling according to claim 1, wherein the radial clearance varies abruptly between the part (11a) providing the smaller radial clearance and the other part (11b) providing the greater radial clearance.

3. A pipe coupling according to claim 1, and having a smooth transition, between the two parts (11a, 11b) of the coupling.

4. A pipe coupling according to any preceding claim, wherein the pipe end (13) is of substantially uniform cross-section, and the socket (11) is of stepped configuration (11a, 11b).

5. A pipe coupling according to any preceding claim, wherein the jointing material comprises solder filling (18) or an anaerobic adhesive material (17).

6. A pipe coupling according to claim 2, wherein, the socket (111) is a machine fitting.

7. A pipe coupling according to claim 2, wherein the socket (211) is a machined socket in a manifold block (222).

8. A pipe coupling according to any one of claims 1 to 5, wherein the socket (11) is provided with a prefilled solder ring (23).

9. A pipe coupling according to any preceding claim, wherein the pipe (12) and the socket (11) are made of stainless steel.

10. A pipe coupling according to any preceding claim, wherein the inner surface (16) of the socket (11) has a pre-tinned layer (16a) in the region of the greater clearance portion of the coupling.

## Patentansprüche

1. Rohrkupplung (10) mit einer Muffe (11), einem Rohr (12), dessen eines Ende (13) in der Muffe (11) mit variierendem radialen Spiel aufgenommen ist, um einen ringförmigen Raum (14) von unterschiedlichem Querschnitt zwischen der Außenfläche (15) des Rohrendes (13) und der Innenfläche (16) der Muffe (11) zu bilden, und mit den ringförmigen Raum (14) füllendem Verbindungsmaterial (17, 18), wobei der ringförmige Raum an oder nahe der in Bezug auf die Muffe innersten Kante (19) des Rohres einen Teil (11a, 111a, 211a; 11b, 111b, 211b) mit geringerem konstantem Spiel, und, an einer von der innersten Kante (19) nach außen beabstandeten Stelle, einen Teil mit einem größeren konstanten Spiel aufweist, dadurch gekennzeichnet, daß die beiden Teile miteinander in Verbindung stehen und das Spiel des ringförmigen Raumes von dem Teil mit dem größeren konstanten Spiel nach außen hin nicht abnimmt, wobei das kleinere radiale Spiel nicht geringer als 0,05mm und das größere radiale Spiel nicht größer als 0,5mm ist, wodurch das Verbindungmaterial je nach Notwendigkeit Lot oder ein Klebemittel sein kann.

2. Rohrkupplung nach Anspruch 1, bei der sich das radiale Spiel zwischen dem Teil (11a), der das kleinere radiale Spiel aufweist, und dem anderen Teil (11b), der das größere radiale Spiel aufweist, abrupt verändert.

3. Rohrkupplung nach Anspruch 1, und mit einem glatten Übergang zwischen den beiden Teilen (11a, 11b) der Verbindung.

4. Rohrkupplung nach einem der vorhergehenden Ansprüche, bei der das Rohrende (13) einen im wesentlichen gleichförmigen Querschnitt aufweist und die Muffe (11) eine gestufte Form (11a, 11b) aufweist.

5. Rohrkupplung nach einem der vorhergehenden Ansprüche, bei der das Verbindungsmaterial eine Lotfüllung (18) oder ein anaerobes Klebematerial (17) ist.

6. Rohrkupplung nach Anspruch 2, bei der die Muffe (111) ein Anschlußstück einer Maschine ist.

7. Rohrkupplung nach Anspruch 2, bei der die Muffe (211) eine maschinenbearbeitete Muffe in einem Verteilerblock (222) ist.

8. Rohrkupplung nach einem der Ansprüche 1 bis 5, bei der die Muffe (11) mit einem vorgefüllten Lotring (23) versehen ist.

9. Rohrkupplung nach einem der vorhergehenden Ansprüche, bei der das Rohr (12) und die Muffe (11) aus rostfreiem Stahl bestehen.

10. Rohrkupplung nach einem der vorhergehenden Ansprüche, bei der die Innenfläche (16) der Muffe (11) im Bereich des Abschnitts der Kupplung mit dem größeren Spiel eine vorverzinnte Schicht (16a) aufweist.

## Revendications

1. Un raccord de tuyaux (10) comprenant un emboîtement (11), un tuyau (12) présentant une extrémité (13) reçue dans l'emboîtement avec un jeu radial variable, de manière à définir un espace annulaire (14) de section transversale variable entre la surface extérieure (15) de l'extrémité du tuyau (13) et la surface intérieure (16) de l'emboîtement (11) et du matériau d'étanchéité (17, 18) remplissant l'espace annulaire (14), l'espace annulaire comprenant une partie (11a, 111a, 211a; 11b, 111b, 211b) à jeu constant plus petit, au ou près du bord (19) du tuyau le plus à l'intérieur par rapport à l'emboîtement et une partie à jeu constant supérieur à un endroit distant vers l'extérieur du bord le plus à l'intérieur (19), caractérisé en ce que les deux parties sont en communication l'une avec l'autre et que le jeu de l'espace annulaire ne diminue pas vers l'extérieur de la partie à jeu constant supérieur, le jeu radial le plus petit n'étant pas inférieur à 0,5mm, le matériau d'étanchéité pouvant être de la soudure ou un adhésif, selon le cas.

2. Un raccord de tuyaux suivant la revendication 1, dans lequel le jeu radial varie brusquement entre la partie (11a) offrant le jeu radial le plus petit et la partie (11b) offrant le jeu radial supérieur.

3. Un raccord de tuyaux suivant la revendication 1 et présentant une transition régulière entre les deux parties (11a, 11b) du raccord.

4. Un raccord de tuyaux suivant l'une ou l'autre des revendications précédentes, dans lequel l'extrémité du tuyau (13) est de section sensiblement uniforme et l'emboîtement (11) est de configuration en étages (11a, 11b).

5. Un raccord de tuyaux suivant l'une ou l'autre des revendications précédentes, dans lequel le matériau d'étanchéité comprend un bourrage de soudure (18) ou un matériau adhésif anaérobie (17).

6. Un raccord de tuyaux suivant la revendication 2, dans lequel l'emboîtement (111) est un accessoire de machine.

7. Un raccord de tuyaux suivant la revendication 2, dans lequel l'emboîtement (211) est un emboîtement usiné dans un bloc à tubulures (222).

8. Un raccord de tuyaux suivant l'une ou l'autre des revendications 1 à 5, dans lequel l'emboîtement (11) est muni d'une bague à soudure préremplie (23).

9. Un raccord de tuyaux suivant l'une ou l'autre des revendications précédentes, dans lequel le tuyau (12) et l'emboîtement (11) sont en acier inoxydable.

10. Un raccord de tuyaux suivant l'une ou l'autre des revendications précédentes, dans lequel la surface intérieure (16) de l'emboîtement (11) présente une couche préétamée (16a) à l'endroit de la partie du raccord à jeu supérieur.

FIG. 1

FIG. 2

FIG. 3

FIG. 4